(19) Europäisches Patentamt
European Patent Office
Office européen des brevets

(11) **EP 2 746 807 A1**

(12) **EUROPÄISCHE PATENTANMELDUNG**

(43) Veröffentlichungstag:
**25.06.2014 Patentblatt 2014/26**

(51) Int Cl.:
**G01S 17/66** (2006.01)    **G01S 17/06** (2006.01)
**G01S 7/497** (2006.01)

(21) Anmeldenummer: **12198763.0**

(22) Anmeldetag: **20.12.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Leica Geosystems AG**
**9435 Heerbrugg (CH)**

(72) Erfinder: **Markendorf, Albert**
**5046 Walde (CH)**

(74) Vertreter: **Gyaja, Christoph Benjamin**
**Kaminski Harmann**
**Patentanwälte AG**
**Landstrasse 124**
**9490 Vaduz (LI)**

(54) **Selbstkalibrierender Lasertracker und Selbstkalibrierungsverfahren**

(57) Die Erfindung betrifft einen Lasertracker (1) zur Positionsbestimmung eines Ziels (80) sowie insbesondere zur fortlaufenden Verfolgung des Ziels (80), aufweisend eine Strahlquelle zur Erzeugung von Messstrahlung (30), Winkelmessfunktionalität zur Bestimmung eines Horizontalschwenkwinkels und eines Vertikalschwenkwinkels, Entfernungsmessfunktionalität und einen positionssensitiven Flächendetektor (10) zur Bestimmung eines Auftreffpunkts (13) der reflektierten Messstrahlung (31) auf dem Flächendetektor (10) und zur Erzeugung eines Ausgangssignals zur Steuerung einer Zielverfolgungsfunktionalität, wobei der Lasertracker (1) ausserdem eine Selbstkalibrierungsfunktionalität zur Kalibrierung eines Strahlversatzes (61) aufweist mit einer reflektierenden Kalibrierungsvorrichtung und einer Bestimmung eines Auftreffpunkts (13) der von der Kalibrierungsvorrichtung reflektierten Messstrahlung (31) auf dem positionssensitiven Flächendetektor (10) und eines Versatzes (71) zwischen dem Auftreffpunkt (13) auf dem positionssensitiven Flächendetektor (10) zu dessen Detektorzentrum (15), dadurch gekennzeichnet, dass die Kalibrierungsvorrichtung ein in den Lasertracker (1) integrierter oder am Lasertracker (1) befestigter Retroreflektor (2) ist, der in einem zweidimensionalen Bereich zur Erzeugung einer versatzfreien, koaxialen Retroreflexion einer auf ihm auftreffenden Messstrahlung (30) ausgebildet ist, ohne dabei einen Versatz der reflektierten Messstrahlung (31) zur Richtung der auftreffenden Messstrahlung (30) zu erzeugen. Die Erfindung betrifft ausserdem ein Selbstkalibrierungsverfahren für einen Lasertracker (1).

Fig. 4

**Beschreibung**

Die vorliegende Erfindung betrifft einen selbstkalibrierenden Lasertracker zur Bestimmung von Koordinaten von Raumpunkten nach dem Oberbegriff des Anspruchs 1. Der Lasertracker weist einen stationären Teil mit einer Basis, einen gegenüber der Basis um eine Vertikalachse rotierbaren Teil und einer zusammen mit dem rotierbaren Teil drehbaren Strahllenkeinheit sowie eine Laserlichtquelle zur Bereitstellung eines durch die Strahllenkeinheit auszusendenden Laserstrahls mit einer Zielachse und einer Einstrahlungsrichtung auf einen anzuzielenden Zielpunkt oder Reflektor auf.

Die Erfindung betrifft auch ein zugehöriges Selbstkalibrierungsverfahren für einen Lasertracker nach dem Oberbegriff des Anspruchs 12.

Ein Lasertracker eingangs genannter Art weist dabei eine Basis, die eine Stehachse definiert, eine Stütze und eine Strahllenkeinheit zur Emission einer Messstrahlung und zum Empfang von zumindest einem Teil der an einem Ziel reflektierten Messstrahlung auf. Das Ausrichten der Strahllenkeinheit erfolgt in zwei Achsen (Stehachse bzw. vertikale Achse und Neigungsachse bzw. Kippachse) mittels Motoren. Dabei ist die Stütze um die Stehachse relativ zur Basis motorisiert schwenkbar, und die Strahllenkeinheit um eine Kippachse relativ zur Stütze. Durch eine Emissionsrichtung der Messstrahlung ist eine Messachse definiert.

Die Strahllenkeinheit ist mit opto-elektro-mechanischen Komponenten ausgestattet und vermittels einer Welle um die Kippachse drehbar an einer oder zwei Lagerstellen an der Stütze gelagert, die gegebenenfalls ebenfalls mit opto-elektro-mechanischen Komponenten ausgestattet ist.

Lasertracker gehören als Koordinatenmessgeräte zu einer Art von Messgeräten, die die Koordinaten eines (Raum-)Punkts durch Aussendung eines Laserstrahls auf den Punkt messen. Der Laserstrahl mag direkt auf dem Punkt auftreffen oder auf einen Retroreflektor (häufig Würfeleckenprisma oder "Corner Cube" oder Anordnung mit drei senkrecht zueinander orientierten Spiegeln) der zu dem Punkt in Kontakt steht. Im Falle eines Retroreflektors wird der darauf auftreffende Laserstrahl "in sich", d. h. koaxial zum emittierten Laserstrahl reflektiert, wenn dieser genau auf dem Zentrum des Retroreflektors auftrifft. Andernfalls, wenn der ausgesandte Laserstrahl auf dem Retroreflektor ausserhalb dessen Zentrums auftrifft, weist der reflektierte Laserstrahl einen parallelen Versatz zum ausgesandten Laserstrahl auf.

Typischerweise bestimmt das Gerät die Koordinaten des Punkts durch Messung der Distanz des Punktes vom Messgerät und zweier Winkel mittels zu Drehachsen des Lasertrackers zugeordneten Winkelencodern bzw. Winkelgebern zwischen einer Standardausrichtung des Laserstrahls bezüglich seiner Anzielrichtung zu dem auszumessenden Punkt. Die Distanz wird mit einer Distanz-Messvorrichtung, wie beispielsweise einem absoluten Distanzmesser und/oder einem Interferometer, gemessen. Beispielhafte Systeme zur Bestimmung von Koordinaten eines Punkts sind offenbart in der US 4,790,651 und der US 4,714,339.

Lasertracker sind eine spezielle Art von Koordinatenmessgeräten, mit denen ein, insbesondere sich bewegender, Zielpunkt, insbesondere ausgebildet als ein Retroreflektor, mittels eines oder mehrerer, insbesondere fokussierter,

Laserstrahlen verfolgt wird.

Für einen zuverlässigen, im Messergebnis reproduzierbaren, Einsatz von Lasertrackern ist die Einstellung und Anwendung von Kalibrierungsparametern erforderlich. Kalibrierungsparameter werden typischerweise als numerische Werte in Form von Software oder Firmware in für die Lasertracker-Steuerung zugänglicher Weise gespeichert und dienen, angewendet auf die Rohmessdaten des Lasertrackers, der Verbesserung der Messgenauigkeit. Typischerweise werden beim Hersteller des Lasertrackers sogenannte Kalibrierungs-Messverfahren zur Bestimmung der Kalibrierungsparameter durchgeführt, und die entsprechenden Kalibrierungsparameter werden mit der Steuerungssoftware gespeichert. Geräteseitig werden üblicherweise ausserdem mit der Steuerung gewisse Toleranzen festgelegt, wie weit aktuelle Kalibrierungsparameter von vorher gespeicherten Kalibrierungsparametern abweichen dürfen. Zur Bestimmung von Änderungen der Gerätekalibrierung werden typischerweise in bestimmten Intervallen und/oder beim Einschalten des Lasertrackers Kontroll-Kalibrierungsmessungen durchgeführt.

Änderungen der erforderlichen Gerätekalibrierung beruhen insbesondere auf thermischen Drift-Effekten, aber auch beispielsweise auf mechanischen Erschütterungen.

In der EP 1 420 264 werden ein Lasertracker und ein damit ausführbares Messverfahren mit Kalibrierungsvorrichtungen und -vorschriften offenbart. Beschrieben wird ein Messsystem, das ein Messgerät mit einem Lasertracker und einen optoelektronischen Sensor in relativ zueinander unveränderbaren Positionen, einen Systemrechner und ein separates, d. h. entfernt vom Lasertracker anzuordnendes, Messhilfsinstrument mit einem Reflektor und mindestens drei Lichtpunkten aufweist. Der Lasertracker wird mittels der nachfolgend beschriebenen Verfahrensschritte kalibriert: Das Messhilfsinstrument wird mit einer Anordnung von Hilfsreflektoren starr verbunden und um mindestens zwei relativ zum Messhilfsinstrument voneinander verschiedene Drehachsen bewegt. In mindestens je zwei Drehpositionen um jede der mindestens zwei Drehachsen werden durch den Lasertracker Reflektor und Hilfsreflektoren angezielt und durch den optoelektronischen Sensor die Lichtpunkte auftreffenden Laserlichts registriert. Aus den Messdaten des Lasertrackers werden Positionen und Orientierungen der Reflektoranordnung relativ zum Lasertracker und aus den Messdaten des optoelektronischen Sensors Positionen und Orientierungen der Lichtpunktanordnung relativ zum optoelektronischen Sensor bestimmt und daraus die mindestens zwei Drehachsen relativ zur Reflektoranordnung bzw. zur Lichtpunktanordnung berechnet. Dann werden aus den ermittelten Messdaten die Kalibrierungsdaten errechnet.

Diese Systemanordnung und die damit verbundene Kalibrierungsmethode entsprechen nicht der Anordnung und nicht den typischerweise gesetzten Spezifikationen eines Lasertrackers gemäss der vorliegenden Erfindung und insbesondere auch nicht heutigen Anforderungen an ein derartiges Messsystem.

Insbesondere nachteilig ist das Messhilfsinstrument für die Kalibrierung ausserhalb des Vermessungsgeräts bzw. Lasertrackers angeordnet, was Anforderungen an heutige Lasertracker für eine möglichst vollständige, kompakt angeordnete Integration bzw. Verbindung mit dem Messgerät nicht erfüllt, und aus der EP 1 420 264 ist kein Selbstkalibrierungsverfahren mit automatisch ablaufenden, gerätegesteuerten Verfahrensschritten ohne Involvierung eines Bedieners zu entnehmen.

In der US 2009/0109426 und der WO 2005/026772 wird ein selbstkalibrierender Lasertracker mit einem Laser zur Aussendung eines Laserstrahls, einem Planspiegel und mindestens zwei integrierten unbeweglichen, reflektierenden Vorrichtungen sowie einem rotierbaren Spiegel und einem positionssensitiven Detektor offenbart. Eine der mindestens zwei unbeweglichen, reflektierenden Vorrichtungen ist als ein Corner-Cube-Retroreflektor und eine zweite als ein Planspiegel ausgebildet. Der Corner-Cube-Retroreflektor und der Planspiegel können an einem stationären Teil des Messsystems in Position fixiert sein und sind ausgebildet, um den Laserstrahl nach einem Zweilagen-Messverfahren, d. h. in einem "Vorderseiten-" und einem "Rückseiten-Modus", zu reflektieren. Dabei entsprechen der "Vorderseiten-Modus" der Ausrichtung des Lasertrackers gemäss einer regulären Zielverfolgung und der "Rückseiten-Modus" einer entgegengesetzten Ausrichtung des Lasertrackers.

Gemäss der in der US 2009/0109426 und der WO 2005/026772 offenbarten Anordnungen werden Messwerte von am Gerät angeordneten Temperatursensoren verwendet, um eine Temperaturabhängigkeit der zu bestimmenden Werte für die Kalibrierungsparameter zu ermitteln.

Die in der US 2009/0109426 und der WO 2005/026772 offenbarten Anordnungen sind jedoch nachteilig wegen der Notwendigkeit einer Verwendung eines aufwendig herstellbaren Einzel-Retroreflektors wie eines Cube-Corner-Retroreflektors mit genau definierten bzw. hergestellten reflektierenden Oberflächen und sehr hohen Anforderungen an dessen exakte Positionierung für Zwecke einer verlässlichen Selbstkalibrierung der Justierung eines Lasertrackers.

Eine Aufgabe der Erfindung ist daher die Bereitstellung eines gegenüber dem Stand der Technik verbesserten Koordinatenmessgerätes, insbesondere eines Lasertrackers, mit weniger aufwendigen optischen Komponenten zur Ausführung einer Selbstkalibrierung der Justierung des Lasertrackers, verbunden mit einer vereinfachten Durchführung der Selbstkalibrierung. Dabei soll der Lasertracker dazu ausgebildet sein, eine solche Selbstkalibrierung seiner Justierung automatisch, insbesondere nach einem Aufstarten des Geräts, ohne erforderliche Tätigkeiten oder Eingriffe eines Benutzers, zu ermöglichen. Ausserdem sollen alle für eine solche Selbstkalibrierung erforderlichen Komponenten in der Koordinaten-Messvorrichtung bzw. dem Lasertracker integriert bzw. daran fest angeordnet sein.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Aufgabe wird erfüllt durch eine selbstkalibrierende Koordinaten-Messvorrichtung, insbesondere einen selbstkalibrierenden Lasertracker, zur Bestimmung von Koordinaten von Raumpunkten. Nachfolgend beziehen sich alle Angaben bezüglich eines Lasertrackers auch auf eine entsprechende Koordinaten-Messvorrichtung. Der Lasertracker weist einen stationären Teil mit einer Basis, einen gegenüber der Basis um eine Vertikalachse rotierbaren Teil und eine zusammen mit dem rotierbaren Teil drehbare Strahllenkeinheit sowie eine Laserlichtquelle zur Bereitstellung eines durch die Strahllenkeinheit auszusendenden Laserstrahls mit einer Zielachse und einer Einstrahlungsrichtung auf einen anzuzielenden Zielpunkt oder Reflektor auf. Vorzugsweise ist an der Basis ein Neigungssensor zur Bestimmung einer Neigung in einer Horizontalrichtung und einer zur Horizontalrichtung senkrechten Vertikalrichtung angeordnet. Des Weiteren weist der Lasertracker eine Kippachse und eine Stehachse auf.

Der Lasertracker weist ausserdem einen positionssensitiven Flächendetektor auf, der insbesondere als ein positionssensitiver Detektor (PSD) ausgestaltet sein kann, ebenso aber auch als ein Bildsensor wie CCD oder CMOS.

Weist der Lasertracker eine Strahllenkeinheit mit optischen Komponenten auf, ist in der Strahllenkeinheit vorzugsweise ein Strahlteiler zur Umlenkung eines von dem Zielpunkt oder dem Reflektor zurückkehrenden Laserstrahls auf den in der Strahllenkeinheit integrierten PSD mit einem Detektorzentrum integriert. Weist der Lasertracker als Strahllenkeinheit hingegen einen beweglichen Spiegel auf, und sind die übrigen optischen Komponenten in der Stütze oder in der Basis integriert, sind auch Strahlteiler und PSD vorzugsweise in der Stütze oder in der Basis integriert.

Der erfindungsgemässe Lasertracker ist gekennzeichnet durch eine als ein Retroreflektor ausgebildete Kalibrierungsvorrichtung. Der Retroreflektor ist erfindungsgemäss in einem zweidimensionalen Bereich zur Erzeugung einer im Wesentlichen versatzfreien, koaxialen Retroreflexion einer auf ihm auftreffenden Messstrahlung ausgebildet ist, d. h. ohne dabei einen wesentlichen Versatz der reflektierten Messstrahlung zur Richtung der auftreffenden Messstrahlung zu erzeugen.

Der zweidimensionale Bereich des Retroreflektors ist erfindungsgemäss grösser als der Strahldurchmesser der auftreffenden Messstrahlung. Vorteilhaft ist der zweidimensionale Bereich dabei mindestens so gross, dass er bei einer - wenigstens in einem erwartbaren Rahmen auftretenden - Abirrung der Messstrahlung (insbesondere ein paralleler Strahlversatz und/oder eine Richtungsabweichung) auch dann noch von der Messstrahlung zu treffen ist, wenn der Mittelpunkt des zweidimensionalen Bereiches angezielt wird. Die Mindestgrösse hängt demzufolge auch von der Position des Retroreflektors ab.

Der Retroreflektor dient zur Bestimmung eines Auftreffpunkts als Servo-Kontrollpunkt des reflektierten Laserstrahls auf dem PSD und eines Versatzes zwischen dem Servo-Kontrollpunkt auf dem PSD zu dessen Detektorzentrum sowie eines Abstands zwischen Zielachse und Stehachse und eines Abstands zwischen Zielachse und Kippachse.

Insbesondere weist der Retroreflektor eine Vielzahl von Einzelreflektoren auf. Allgemein bevorzugt ist der Retroreflektor als eine retroreflektierende Folie oder ein starrer Rückstrahler aus Kunststoff und insbesondere zusammengesetzt aus Einzelprismen oder einzelnen reflektierenden Kugeln ausgebildet. Vorteilhaft ist die Herstellung solcher Retroreflektoren, insbesondere wenn es sich dabei um in grossen Massen vertriebene Erzeugnisse handelt, mit relativ niedrigem Aufwand und daher auch entsprechend niedrigen Produktkosten verbunden.

Die Erfindung stellt damit einen Lasertracker mit, im Vergleich zum Stand der Technik, weit weniger aufwendig ausgebildeten Komponenten bereit, mit denen eine automatisch ablaufende Selbstkalibrierung der Justierung des Lasertrackers ohne erforderliche Tätigkeiten oder Eingriffe eines Benutzers ermöglicht wird. Vorteilhaft wird dabei insbesondere ein Strahlversatz zwischen eingestrahltem und reflektiertem Laserstrahl durch nicht mittiges Auftreffen des eingestrahlten Laserstrahls auf einem Retroreflektor im Wesentlichen vermieden.

Der Retroreflektor kann sowohl in den stationären Teil oder den rotierbaren Teil integriert oder mit dem stationären Teil oder dem rotierbaren Teil fest verbunden sein, als auch innerhalb der Strahllenkeinheit angeordnet sein, vorteilhaft in den Strahlengang der Messstrahlung bewegbar angeordnet.

Vorzugsweise ist der Retroreflektor gegen eine zur Einstrahlungsrichtung orthogonale Ebene geneigt angeordnet. Dadurch werden nachteilige Effekte durch Reflexion des eingestrahlten Lichts an einer Frontfläche, statt an den zur Reflexionen vorgesehenen optischen Flächen, des Retroreflektors vermindert oder sogar vermieden.

Ausserdem wird bevorzugt, dass der Retroreflektor mit einer Vorrichtung zu einer Lichtabschattung, in einem Strahlengang zu dem PSD kombiniert angeordnet ist. Vorzugsweise ist dabei die Anordnung zur Lichtabschattung im Strahlengang schwenk- oder drehbar ausgebildet, so dass sequentiell, ohne eine Veränderung des Strahlengangs, Intensitäten von Reflexionen auf den PSD und Intensitäten bei Abschattung des Strahlengangs gemessen und aufgezeichnet werden können.

Des Weiteren wird für eine spezielle Ausführungsform der Erfindung bevorzugt, dass der Retroreflektor gegenüber einem auf ihn eintreffenden Laserstrahl schwenkbar oder rotierbar, insbesondere als ein Bestandteil einer um eine Rotationsachse schwenk- oder rotierbaren Scheibe, angeordnet und ausgebildet ist. Dabei kann die Scheibe mit dem Retroreflektor sowohl ausserhalb als auch innerhalb angeordnet sein, wobei sich bei einer bevorzugten Anordnung innerhalb der Strahllenkeinheit erforderliche Justierungen der Scheibe mit dem Retroreflektor im Strahlengang erübrigen.

Bei einer Rotation eines viele Einzelreflektoren aufweisenden Retroreflektors mit der Scheibe während der Reflexion des eingestrahlten Lichts zu dem PSD können vorteilhaft nachteilige Effekte durch Fehlreflexionen oder sogar Ausfall von Reflexionen an nicht perfekt ausgebildeten Oberflächen des Retroreflektors vermindert oder sogar eliminiert werden. Dieses wird durch eine Mittelung der Messdaten von sequentiell erfolgenden Reflexionen an im Strahlengang bewegten Einzelreflektoren des Retroreflektors ermöglicht.

Dabei ist vorzugsweise der Retroreflektor nicht senkrecht zur Rotationsachse der Scheibe angebracht, so dass bei einer Rotation des Retroreflektors um diese Rotationsachse ein Taumelfehler bewirkbar ist. Durch eine bei Rotation der Achse mit Retroreflektor und Scheibe erfolgende Taumelbewegung des Retroreflektors ändern sich dann sequentiell die Anzielwinkel und damit die Abstände zu den Einzelreflektoren des Retroreflektors und auch zum Retroreflektor gesamthaft beziehungsweise die zugehörigen Weglängen des auf den Retroreflektor eingestrahlten Lichts permanent. Dabei betragen die Weglängenänderungen vorzugsweise mehrere Wellenlängen des eingestrahlten Lichts. Dadurch werden bei sequentiellen Messungen entsprechende sequentielle Verschiebungen eines möglicherweise erzeugten Interferenzmusters des auf den PSD gelenkten Lichts bewirkt, so dass durch Mittelung der Messergebnisse Effekte der Interferenzen eliminiert werden können.

Bezüglich der vorgenannten speziellen Ausführungsform der Erfindung mit dem Retroreflektor als ein Bestandteil einer um eine Rotationsachse schwenk- oder rotierbaren Scheibe ausgebildeten Retroreflektor wird des Weiteren bevorzugt, dass die rotierbare Scheibe ausgebildet ist mit einem ersten Oberflächenanteil, der von dem Retroreflektor gebildet ist, einem zweiten Oberflächenanteil, der im Wesentlichen lichtundurchlässig ist, und einem dritten Oberflächenanteil, der für den Laserstrahl optisch transparent ist.

Dabei ist erfindungsgemäss die Scheibe mit einer für unterschiedlichen Lichtdurchlass segmentierten Ausgestaltung bzw. Oberfläche ausgebildet. Die Scheibe ist um eine Achse schwenk- und/oder rotierbar angeordnet. Ein beispielsweise halbkreisartiger Bereich der Scheibe ist mit einem aus vielen Einzelreflektoren bestehenden Retroreflektor, insbesondere einer retroreflektierenden Folie, ausgestattet. Ein weiterer Bereich der Scheibe ist für einen Dunkelabgleich, d. h. für Messungen zu einer Bestimmung einer Basislinie von Detektorsignalen, ohne auf den PSD zurückreflektiertes Licht, bereit gestellt. Dabei kann dieser Bereich beispielsweise eine lichtabsorbierende und insbesondere auch in Reflexion diffus streuende dunkle Oberfläche, insbesondere aus Filz oder Samt, aufweisen. Ein weiterer Bereich der Scheibe ist für auftreffendes Licht transparent, d. h. für reguläre Messungen mit dem Lasertracker, ausgebildet.

Diese Weiterentwicklung der Erfindung ist mit verschiedenen Vorteilen verbunden. Insbesondere muss der ausgesandte Laserstrahl zwecks Messungen zur Bestimmung des Servo-Kontrollpunkts und dessen Abstands zum Zentrum des PSD für die Selbstkalibrierung der Justierung und eine Anzielung eines, insbesondere zu verfolgenden, ausserhalb des Lasertrackers angeordneten, Objekts nicht unterschiedlich ausgerichtet werden.

Für die Bestimmung des Servo-Kontrollpunkts gibt es dabei verschiedene Ausführungsmöglichkeiten: Gemäss einer ersten Ausführungsmöglichkeit pendelt die Scheibe im Bereich des Retroreflektors senkrecht zur Aussendungsrichtung des Laserstrahls zwischen zwei Positionen hin und her, wobei fortlaufend sequentielle Messungen durchgeführt werden, so dass nachteilige Effekte von teilweise nicht perfekt ausgebildeten Oberflächen des Retroreflektors durch Mittelung der sequentiellen Messergebnisse eliminierbar sind. Gemäss einer anderen Ausführungsmöglichkeit, verbunden mit gleichartigen Vorteilen von Messungen auf verschiedenen Auftreffpunkten des Retroreflektors, rotiert die Scheibe mit ihren für Lichtdurchlass unterschiedlich ausgebildeten Bereichen kontinuierlich in einer Richtung, wobei fortlaufend die Intensität auf den PSD zurückgeworfenen Lichts gemessen und als Funktion der rotatorischen Stellung der Scheibe gemessen, als ein Messprotokoll aufgezeichnet und ausgewertet wird.

In einer Ausführungsform ist der Retroreflektor in der Strahllenkeinheit derart beweglich angeordnet, dass durch die Ausrichtung der Strahllenkeinheit relativ zur Richtung der Schwerkraft der Retroreflektor durch die Schwerkraft, also unmotorisiert, in den Strahlengang der Messstrahlung hineinbewegbar ist und bei einer Änderung der Ausrichtung durch die Schwerkraft wieder zurück in die Ausgangsposition bewegbar ist.

Gemäss einer anderen bevorzugten Ausführungsform der Erfindung ist der, insbesondere aus vielen Einzelreflektoren bestehende, Retroreflektor ausserhalb der Strahllenkeinheit angeordnet und mit dem stationären Teil des Lasertrackers verbunden, und vorzugsweise nicht als ein Bestandteil einer rotierbaren Scheibe ausgebildet, sondern die Strahllenkeinheit, insbesondere motorangetrieben, mit einem Bewegungszentrum in einen Teleskop-Drehpunkt um eine Kippachse und eine Stehachse schwenkbar oder drehbar angeordnet, so dass durch eine entsprechende Bewegung der Strahllenkeinheit zeitlich sequentiell ein zweidimensionaler Verlauf des Auftreffpunkts des Laserstrahls auf einer Oberfläche des Retroreflektors, insbesondere mit einer zweidimensional kreisartigen oder schlaufenartigen geometrischen Kontur, erzeugbar ist.

Vorteilhaft können auch durch eine solche Führung des eingestrahlten Laserstrahls auf einen aus vielen Einzelreflektoren bestehenden Reflektor nachteilige Effekte durch Fehlreflexionen oder sogar Ausfall von Reflexionen an nicht perfekt ausgebildeten Oberflächen des Retroreflektors vermindert oder sogar eliminiert werden. Dieses wird durch eine Mittelung der Messdaten von sequentiell erfolgenden Reflexionen an im Strahlengang bewegten Einzelreflektoren des Retroreflektors ermöglicht.

Die begrenzte Präzision der Einzelreflektoren kann zur Folge haben, dass das reflektierte Licht mit einer ausgeprägten Lichtgranulation, in der Art eines Interferenzmusters, zurückgestrahlt wird, was zu einer signifikanten Verschiebung des Intensitätsschwerpunkts des zurückgestrahlten Lichts im Vergleich zu einem perfekt reflektierten Lichtstrahl führen kann. Vorteilhaft ist ein aus vielen Einzelreflektoren bestehender Retroreflektor daher in einer nicht orthogonal zur Richtung der Messstrahlung liegenden Ebene angeordnet, sodass die Messstrahlung schräg, d. h. nicht im rechten Winkel, auf den Retroreflektor auftrifft. Bei einem Abfahren eines Pfades auf dem schrägstehenden Retroreflektor mit der Messstrahlung kommt es so automatisch zu einer Distanzvariation, wobei die Weglängenänderung vorzugsweise mehrere Wellenlängen des eingestrahlten Lichts beträgt. Es werden entsprechende sequentielle Verschiebungen eines möglicherweise erzeugten Interferenzmusters des auf den PSD gelenkten Lichts bewirkt und aufgezeichnet. Durch eine Mittelung der Messergebnisse werden dann Effekte von möglichen Interferenzen des auf den PSD auftreffenden Laserlichts eliminiert.

Gemäss einer weiteren bevorzugten Ausführungsform der Erfindung ist der, insbesondere aus vielen Einzelreflektoren bestehende, Retroreflektor ebenfalls ausserhalb der Strahllenkeinheit angeordnet und dabei mit dem um eine Vertikalachse rotierbaren Teil des Lasertrackers direkt oder indirekt verbunden. Dabei wird des Weiteren bevorzugt, dass die Strahllenkeinheit um einen Teleskop-Drehpunkt um eine Kippachse und eine Stehachse schwenkbar angeordnet ist und durch Schwenken der Strahllenkeinheit zeitlich sequentiell ein eindimensionaler Verlauf des Auftreffpunktes des Laserstrahls auf einer Oberfläche des Retroreflektors erzeugbar ist. Die auf diesem Retroreflektor erzeugte Bahn des auftreffenden Laserstrahls kann die geometrische Form einer Geraden oder eines schmalen Streifens haben. Dieses ist mit gleichartigen Vorteilen wie die vorangehend beschriebene Variante mit Erzeugung einer zweidimensionalen Bahn auf der Oberfläche des Retroreflektors verbunden: Durch eine solche Führung des eingestrahlten Laserstrahls auf den aus vielen Einzelreflektoren bestehenden Reflektor können vorteilhaft nachteilige Effekte durch Fehlreflexionen oder sogar Ausfall von Reflexionen an nicht perfekt ausgebildeten Oberflächen des Retroreflektors vermindert oder sogar eliminiert werden. Dieses wird durch eine Mittelung der Messdaten von sequentiell erfolgenden Reflexionen an im Strahlengang bewegten Einzelreflektoren des Retroreflektors ermöglicht.

Ein weiterer Gegenstand der Erfindung ist ein Selbstkalibrierungsverfahren für einen erfindungsgemässen Lasertracker. Der Lasertracker weist einen stationären Teil mit einer Basis, einen gegenüber der Basis um eine Vertikalachse rotierbaren Teil und eine zusammen mit dem rotierbaren Teil drehbare Strahllenkeinheit sowie eine Laserlichtquelle zur Bereitstellung eines durch die Strahllenkeinheit auszusendenden Laserstrahls mit einer Zielachse und einer Einstrahlungsrichtung auf einen anzuzielenden Zielpunkt oder Reflektor auf. Vorzugsweise ist an der Basis ein Neigungssensor zur Bestimmung einer Neigung in einer Horizontalrichtung und einer zur Horizontalrichtung senkrechten Vertikalrichtung angeordnet. Des weiteren weist der Lasertracker eine Kippachse und eine Stehachse auf. In der Strahllenkeinheit ist ein Strahlteiler zur Umlenkung eines von dem Zielpunkt oder dem Reflektor zurückkehrenden Laserstrahls auf einen in der Strahllenkeinheit integrierten PSD mit einem Detektorzentrum integriert.

Als Teilschritt des Verfahrens wird optional mit dem Neigungssensor eine Neigung der Basis in einer Horizontalrichtung und einer zur Horizontalrichtung senkrechten Vertikalrichtung bestimmt. Erfindungsgemäss weist das Verfahren als weitere Schritte auf:

● Aussenden eines Laserstrahls von der Strahllenkeinheit auf den Retroreflektor, der in einem zweidimensionalen Bereich zur Erzeugung einer im Wesentlichen versatzfreien, koaxialen Retroreflexion einer auf ihm auftreffenden Messstrahlung ausgebildet ist, ohne dabei einen wesentlichen Versatz der reflektierten Messstrahlung zur Richtung der auftreffenden Messstrahlung zu erzeugen, insbesondere wobei der Retroreflektor im zweidimensionalen Bereich eine Vielzahl von Einzelreflektoren aufweist;

● Bestimmen eines Auftreffpunkts des reflektierten Laserstrahls auf dem PSD als einem Servo-Kontrollpunkt und eines Versatzes zwischen dem Servo-Kontrollpunkt auf dem PSD zu dessen Detektorzentrum, sowie von Abständen zwischen Zielachse und Stehachse sowie zwischen Zielachse und Kippachse; und

● Bestimmen eines Zielachsen-Richtungsfehlers mittels einer mit dem stationären Teil, insbesondere der Basis, fest verbundenen Messvorrichtung.

Dabei kann der Retroreflektor sowohl in den stationären Teil oder den rotierbaren Teil integriert oder mit dem stationären Teil oder dem rotierbaren Teil fest verbunden sein, als auch innerhalb der Strahllenkeinheit bereitgestellt sein.

Vorzugsweise, bei einer entsprechenden Ausbildung des erfindungsgemässen Lasertrackers, wird der Retroreflektor zwecks Durchführung sequentieller Messungen, gegenüber der Einstrahlungsrichtung des auf ihn auftreffenden Laserstrahls bewegt, insbesondere geschwenkt oder rotiert. Die Messdaten von sequentiell erfolgenden Reflexionen an im Strahlengang bewegten Einzelreflektoren des Retroreflektors werden gemittelt. Dadurch können vorteilhaft nachteilige Effekte durch Fehlreflexionen oder sogar Ausfall von Reflexionen an nicht perfekt ausgebildeten Oberflächen des Retroreflektors vermindert oder sogar eliminiert werden.

Es wird bevorzugt, dass der der Retroreflektor mit einer Vorrichtung zu einer Lichtabschattung, in einem Strahlengang zu dem PSD kombiniert angeordnet ist. Vorzugsweise wird dabei die Anordnung zur Lichtabschattung im Strahlengang geschwenkt oder gedreht bzw. rotiert. Dadurch können vorteilhaft sequentiell, ohne eine Veränderung des Strahlengangs, Intensitäten von Reflexionen auf den PSD und Intensitäten bei Abschattung des Strahlengangs gemessen und aufgezeichnet werden.

Des Weiteren wird für eine spezielle Ausführungsform des erfindungsgemässen Verfahrens bevorzugt, dass der Retroreflektor schwenkbar oder rotierbar als ein Bestandteil einer um eine Rotationsachse schwenk- oder rotierbaren Scheibe, angeordnet und ausgebildet ist, wobei die Scheibe mit dem Retroreflektor ausserhalb oder innerhalb, vorzugsweise aber innerhalb der Strahllenkeinheit angeordnet ist. Erfindungsgemäss wird dann die Scheibe mit dem Retroreflektor im Strahlengang des ausgesandten Laserstrahls geschwenkt oder gedreht zwecks Durchführung sequentieller Messungen. Bei einer vorteilhaften Anordnung innerhalb der Strahllenkeinheit erübrigen sich andernfalls möglicherweise zusätzlich erforderliche Justierungen der Scheibe mit dem Retroreflektor im Strahlengang.

Dabei wird des Weiteren bevorzugt, dass der Retroreflektor nicht senkrecht zur Rotationsachse der Scheibe angeordnet ist, sodass bei einer Rotation dieses Retroreflektors um die Rotationsachse eine Taumelbewegung des Retroreflektors bewirkt wird. Durch eine bei Rotation der Achse mit Retroreflektor und Scheibe erfolgende Taumelbewegung des Retroreflektors ändern sich dann sequentiell die Anzielwinkel und damit die Abstände zu den Einzelreflektoren des Retroreflektors und auch zum Retroreflektor gesamthaft, beziehungsweise die zugehörigen Weglängen des auf den Retroreflektor eingestrahlten Lichts permanent. Dabei betragen die Weglängenänderungen vorzugsweise mehrere Wellenlängen des eingestrahlten Lichts. Vorteilhaft werden bei den Taumelbewegungen des Retroreflektors während der Rotation sequentiell Messungen durchgeführt und entsprechende sequentielle Verschiebungen eines möglicherweise erzeugten Interferenzmusters des auf den PSD gelenkten Lichts bewirkt und aufgezeichnet. Durch eine Mittelung der Messergebnisse werden dann Effekte von möglichen Interferenzen des auf den PSD auftreffenden Laserlichts eliminiert.

Bezüglich der vorgenannten speziellen Ausführungsform des erfindungsgemässen Verfahrens mit dem als ein Bestandteil einer um eine Rotationsachse schwenk- oder rotierbaren Scheibe ausgebildeten Retroreflektor wird des Weiteren bevorzugt, dass die rotierbare Scheibe ausgebildet ist mit einem ersten Oberflächenanteil, der von dem Retroreflektor gebildet ist, einem zweiten Oberflächenanteil, der im Wesentlichen lichtundurchlässig ist, und einem dritten Oberflächenanteil, der für den Laserstrahl optisch transparent ist, wobei die Scheibe mit einer für unterschiedlichen Lichtdurchlass segmentierten Ausgestaltung bzw. Oberfläche ausgebildet ist. Die Scheibe wird um eine Achse geschwenkt und/oder rotiert. Ein beispielsweise halbkreisartiger Bereich der Scheibe ist mit einem aus vielen Einzelreflektoren bestehenden Retroreflektor, insbesondere einer retroreflektierenden Folie, ausgestattet, und bei Bewegung des von der Strahllenkeinheit ausgesandten Lichts wird vom Retroreflektor Laserlicht zum PSD zurückreflektiert und aufgezeichnet. Ein weiterer Bereich der Scheibe ist für einen Dunkelabgleich, d. h. für Messungen zu einer Bestimmung einer Basislinie von Detektorsignalen, ohne auf den PSD zurückreflektiertes Licht, bereitgestellt. Dabei kann dieser Bereich beispielsweise eine Licht absorbierende und insbesondere auch in Reflexion diffus streuende dunkle Oberfläche, insbesondere aus Filz oder Samt, aufweisen. Bei Durchgang dieses Bereichs durch den eingestrahlten Laserstrahl wird ein Hintergrund-Lichtsignal ("Background") von dem PSD gemessen und aufgezeichnet. Ein weiterer Bereich der Scheibe ist für auftreffendes Licht transparent, d. h. für reguläre Messungen mit dem Lasertracker, ausgebildet.

Diese Weiterentwicklung der Erfindung ist mit verschiedenen Vorteilen verbunden. Insbesondere muss der ausgesandte Laserstrahl zwecks Messungen zur Bestimmung des Servo-Kontrollpunkts und dessen Abstands zum Zentrum des PSD für die Selbstkalibrierung der Justierung und eine Anzielung eines, insbesondere zu verfolgenden, ausserhalb des Lasertrackers angeordneten, Objekts nicht unterschiedlich ausgerichtet werden.

Für die Bestimmung des Servo-Kontrollpunkts gibt es dabei verschiedene Ausführungsmöglichkeiten: Gemäss einer ersten Ausführungsmöglichkeit pendelt die Scheibe im Bereich des Retroreflektors senkrecht zur Aussendungsrichtung des Laserstrahls zwischen zwei Positionen hin und her, wobei fortlaufend sequentielle Messungen durchgeführt werden, sodass nachteilige Effekte von nicht perfekt ausgebildeten Oberflächen des Retroreflektors durch Mittelung der sequentiellen Messergebnisse eliminierbar sind. Gemäss einer anderen Ausführungsmöglichkeit, verbunden mit gleichartigen Vorteilen von Messungen auf verschiedenen Auftreffpunkten des Retroreflektors, rotiert die Scheibe mit ihren für Lichtdurchlass unterschiedlich ausgebildeten Bereichen kontinuierlich in einer Richtung, wobei fortlaufend die Intensität auf den PSD zurückgeworfenen Lichts als Funktion der rotatorischen Stellung der Scheibe gemessen, als ein Messprotokoll aufgezeichnet und ausgewertet wird.

Gemäss einer anderen bevorzugten Ausführungsform der Erfindung ist der, insbesondere aus vielen Einzelreflektoren bestehende, Retroreflektor ausserhalb der Strahllenkeinheit angeordnet und mit dem stationären Teil des Lasertrackers verbunden, und vorzugsweise nicht als ein Bestandteil einer rotierbaren Scheibe ausgebildet, sondern die Strahllenkeinheit, insbesondere motorangetrieben, mit einem Bewegungszentrum in einen Teleskop-Drehpunkt um eine Kippachse und eine Stehachse schwenkbar oder drehbar angeordnet. Gemäss dieser Ausführungsform des erfindungsgemässen Verfahrens wird durch eine entsprechende Bewegung der Strahllenkeinheit zeitlich sequentiell ein zweidimensionaler Verlauf des Auftreffpunkts des Laserstrahls auf einer Oberfläche des Retroreflektors erzeugt, insbesondere mit einer zweidimensional kreisartigen oder schlaufenartigen geometrischen Kontur. Messdaten von sequentiell erfolgenden Reflexionen an im Strahlengang bewegten Einzelreflektoren des Retroreflektors werden gemittelt.

Vorteilhaft können auch durch eine solche Führung des eingestrahlten Laserstrahls auf den aus vielen Einzelreflektoren bestehenden Reflektor nachteilige Effekte durch Fehlreflexionen oder sogar Ausfall von Reflexionen an nicht perfekt ausgebildeten Oberflächen des Retroreflektors vermindert oder sogar eliminiert werden.

Gemäss einer weiteren bevorzugten Ausführungsform der Erfindung ist der, insbesondere aus vielen Einzelreflektoren bestehende, Retroreflektor ebenfalls ausserhalb der Strahllenkeinheit angeordnet und dabei mit dem um eine Vertikalachse rotierbaren Teil des Lasertrackers direkt oder indirekt verbunden. Dabei wird des Weiteren bevorzugt, dass die Strahllenkeinheit um einen Teleskop-Drehpunkt um eine Kippachse und eine Stehachse schwenkbar und/oder drehbar angeordnet ist und durch Schwenken oder Drehen der Strahllenkeinheit zeitlich sequentiell ein eindimensionaler Verlauf des Auftreffpunktes des Laserstrahls auf einer Oberfläche des Retroreflektors erzeugt wird. Die auf diesem Retroreflektor erzeugte Bahn des auftreffenden Laserstrahls kann die geometrische Form einer Geraden oder eines schmalen Streifens haben. Dieses ist mit gleichartigen Vorteilen wie für die vorangehend beschriebene Variante mit Erzeugung einer zweidimensionalen Bahn auf der Oberfläche des Retroreflektors verbunden: Durch eine solche Führung des eingestrahlten Laserstrahls auf den aus vielen Einzelreflektoren bestehenden Reflektor werden vorteilhaft nachteilige Effekte durch Fehlreflexionen oder sogar Ausfall von Reflexionen an nicht perfekt ausgebildeten Oberflächen des Retroreflektors vermindert oder sogar eliminiert. Dazu wird eine Mittelung der Messdaten von sequentiell erfolgenden Reflexionen an im Strahlengang bewegten Einzelreflektoren des Retroreflektors durchgeführt.

Der erfindungsgemässe Lasertracker und das erfindungsgemässe Selbstkalibrierungsverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1      einen erfindungsgemässen Lasertracker mit einem Messhilfsmittel;

Fig. 2      einen erfindungsgemässen Lasertracker in einer Frontansicht;

Fig. 3a-b    eine Verwendung eines grossen Einzel-Retroreflektors als Kalibrierungsvorrichtung zur Bestimmung eines Strahlversatzes des auf den PSD auftreffenden, zurückkehrenden Laserstrahls;

Fig. 4    eine Verwendung eines erfindungsgemässen Retroreflektors als Kalibrierungsvorrichtung zur Bestimmung eines Strahlversatzes des auf den PSD auftreffenden, zurückkehrenden Laserstrahls;

Fig. 5a-d    Unterschiede bei der Verwendung der in den Figuren 3a-b und 4 gezeigten Kalibrierungsvorrichtungen;

Fig. 6a-c    Mikroskopaufnahmen unterschiedlicher Strukturen von aus vielen Einzelreflektoren bestehenden Retroreflektoren;

Fig. 7a    eine erste Weiterentwicklung der Erfindung mit einem aus vielen Einzelreflektoren bestehenden Rückreflektor, der auf einer Scheibe und damit zusammen auf einer von einem Motor rotierbar antreibbaren Drehachse montiert ist;

Fig. 7b    eine zusätzliche Weiterentwicklung zu der Ausführungsform der Erfindung gemäss Fig. 7a;

Fig. 8    einen beispielhaften Verlauf einer mit der Ausführungsform der Erfindung gemäss Fig. 7b durchgeführter Messungen und mit einem PSD bestimmter Intensitäten auf diesen Detektor auftreffenden Lichts, als Funktion der rotatorischen Position der Scheibe;

Fig. 9a-b    beispielhaft für eine andere Ausführungsform der Erfindung, bei welcher der aus vielen Einzelreflektoren bestehende Retroreflektor an einem stationären Teil des Lasertrackers angeordnet ist, zweidimensionale Bahnen in Form einer mäanderförmigen Bahn und einer Kreisbahn; und

Fig. 9c    beispielhaft für eine Konfiguration, bei welcher der aus vielen Einzelreflektoren bestehende Retroreflektor an einem rotierbaren Teil des Lasertrackers angeordnet ist, eine eindimensionale Bahn.

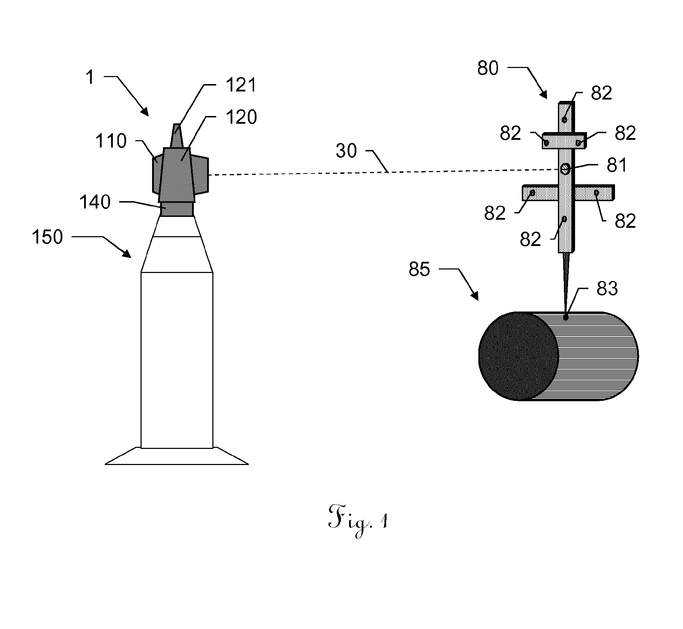

Figur 1 zeigt eine beispielhafte Ausführungsform eines erfindungsgemässen Lasertrackers 1, umfassend eine Basis 140, eine darauf angebrachte Stütze 120 mit einem Griff 121 und eine an zwei (nicht dargestellten) Holmen der Stütze 120 gelagerte Strahllenkeinheit 110. Der abgebildete Lasertracker 1 ist auf einem Stativ 150 angeordnet und misst mittels eines Laserstrahles 30 die Distanz zu einem auf einem Messhilfsmittel 80 befindlichen Retroreflektor 81. Das Messhilfsmittel 80 - hier beispielhaft als Messtaster ausgeführt - umfasst weiterhin eine Anzahl Zielmarkierungen 82, beispielsweise in Form von reflektierenden oder selbstleuchtenden Lichtpunkten, sowie einen Messkopf 83 zum Plazieren auf einem zu vermessenden Zielpunkt eines Zielobjektes 85.

Der dargestellte Lasertracker 1 beinhaltet eine Messkamera, die insbesondere als fokussierbares Vario-Kamerasystem mit variabler Vergrösserung ausgestaltet ist, um die auf dem Messhilfsmittel 80 angeordneten Zielmarkierungen 82 zu erfassen. Anhand der von der Messkamera aufgenommenen Positionen der Zielmarkierungen 82 ist die räumliche Ausrichtung des Messhilfsmittels 80 bestimmbar.

Um Bewegungen des Messhilfsmittels 80 zu erkennen und nachvollziehen zu können, sodass der Laserstrahl 36 auf den Retroreflektor 81 ausgerichtet bleibt, weist der Lasertracker 1 einen positionssensitiven Detektor (PSD) auf, insbesondere einen Tracking-Flächensensor, wie er beispielsweise in der WO 2007/079600 A1 geoffenbart ist.

Der PSD ist vorzugsweise in der Strahllenkeinheit 10 angeordnet und ermöglicht durch ein Erfassen der Ausrichtung des von einem Ziel, insbesondere dem Retroreflektor 81, reflektierten Laserstrahls 30 das Nachführen der Ausrichtung des Laserstrahls 30. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Messgerät bestimmt werden.

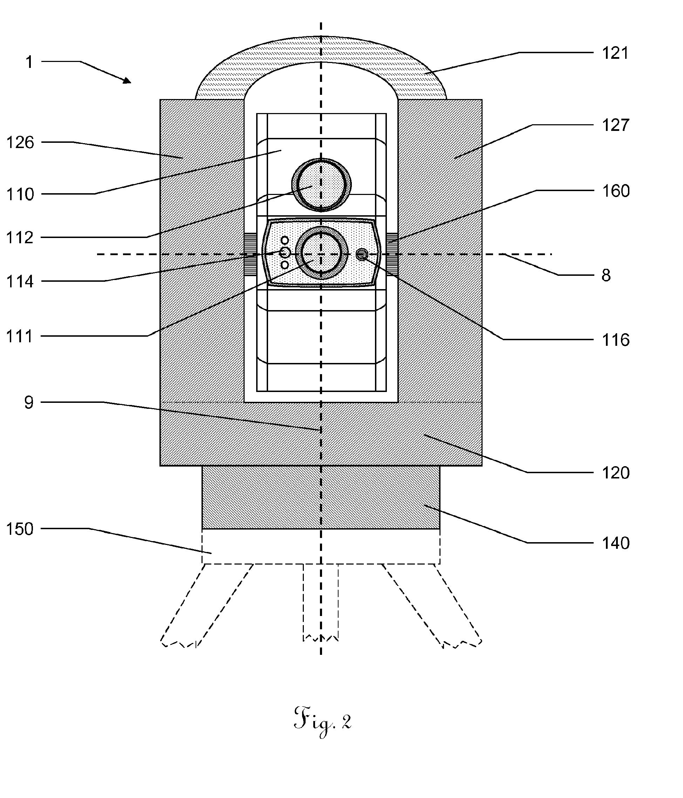

Figur 2 zeigt eine beispielhafte Ausführungsform eines erfindungsgemässen Lasertrackers 1 in einer Frontalansicht. Der Lasertracker 1 umfasst eine Basis 140, die auf einer Haltevorrichtung befestigbar ist, hier dargestellt in Form eines Stativs 150. Auf der Basis 140 ist eine Stütze 120 um die Vertikalachse 9 drehbar gelagert angebracht. Die Stütze 120 umfasst einen ersten Holm 126 und einen zweiten Holm 127, die von der Stütze 120 aus nach oben ragen und an welchen eine Strahllenkeinheit 110 mittels einer Welle 160 um die Horizontalachse 8 kippbar gelagert ist. An den beiden Holmen 126,127 ist ein Griff 121 für den Transport und die Handhabung des Lasertrackers 1 angebracht. Der Griff 121 kann fest mit den Holmen 126,127 verbunden sein, beispielsweise aus einem Guss mit diesen hergestellt oder angeschweisst sein, so dass er als zusätzlich stabilisierendes Element für die Holme 126,127 dient, insbesondere hinsichtlich eines Verbiegens.

An der Strahllenkeinheit 110 sind in dieser beispielhaften Ausführungsform mehrere Optiken vorgesehen, insbesondere eine Optik 112 einer Messkamera, sowie eine Laseraussende-und -empfangsoptik 111 einer optischen Distanzmessvorrichtung. Des weiteren weist die Strahllenkeinheit 110 vorzugsweise eine Optik einer Lokalisierungskamera 114 zur Groblokalisierung des Messhilfsmittels 80 und eine Optik einer Übersichtskamera 116 zur Bereitstellung von Bildern für einen Benutzer auf.

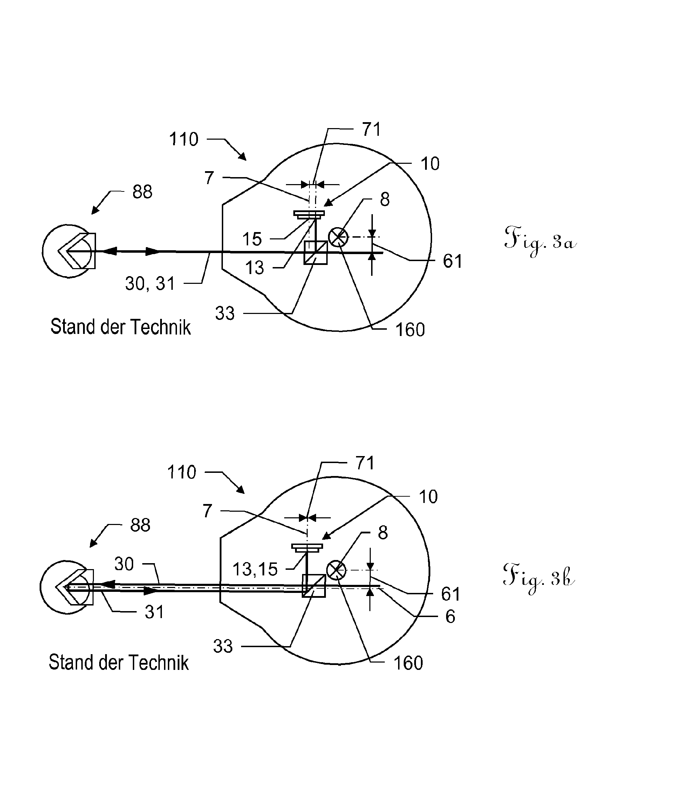

Die Figuren 3a und 3b illustrieren die Verwendung einer Kalibrierungsvorrichtung in Form eines grossen Einzelreflektors 88, wie beispielsweise eines Prismas oder eines Corner Cubes, zur Bestimmung eines Strahlversatzes 61 des auf den positionssensitiven Detektor (PSD) 10 auftreffenden, zurückkehrenden Laserstrahls 31 gegenüber dem Detektorzentrum 15, sowie die Nachteile, die sich bei dieser Verwendung ergeben.

Gemäss der Ausrichtung des ausgesandten Laserstrahls 30 nach Figur 3a tritt dieser exakt durch die Mitte des Strahlteilers 33 hindurch und trifft auch exakt im Zentrum des Einzel-Retroreflektors 88 derart auf, dass er in sich als ein zurückkommender Laserstrahl 31 reflektiert wird und durch den Strahlteiler 33 auf den PSD 10 mit einem Detektorzentrum 15 umgelenkt wird.

Auf dem PSD 10 trifft der Laserstrahl 31 an einem in der Regel von dem Detektorzentrum 15 verschiedenen Punkt 13 auf. Wenn die Richtung und Positionierung des ausgesandten Laserstrahls 30 auf den Retroreflektor eingeregelt sind, ist dieser Auftreffpunkt mit einem sogenannten Servokontrollpunkt identisch, dessen genaue Bestimmung für weitere Massnahmen und Messungen zur Selbstkalibrierung des Lasertrackers wesentlich ist. Der dermassen bestimmte Servokontrollpunkt weist in der Regel einen Versatz 71 zum Detektorzentrum 15 auf.

Angegeben sind in Figur 3a des Weiteren eine Teleskop-Drehachse 8, um welche die Strahllenkeinheit 110 drehbar ist, ein Strahlversatz 61 zwischen einer Zentralachse durch die Drehachse 8 und dem zurückkehrenden Laserstrahl 31 und die Achsen 6 und 7. Gemäss der Situation nach Figur 3a können der Versatz 71 und der Strahlversatz 61 separat voneinander bestimmt werden.

Figur 3b illustriert eine Situation, gemäss derer der ausgesandte Laserstrahl 30 nicht mittig auf dem Einzelreflektor 88 auftrifft, aber der Abstand 71 auf dem PSD 10 und der Strahlversatz 61 der Zielachse zusammen korreliert bekannt sind. Gemäss dieser Situation trifft der ausgesandte Laserstrahl 30 nicht mittig auf dem Zentrum des Einzel-Retroreflektors 88 auf, sondern auf einer ersten seitlichen Reflexionsfläche, und wird um dessen Zentrum herumgelenkt auf eine gegenüberliegende zweite Reflexionsfläche, von wo er als zurückkehrender Laserstrahl 31 parallel versetzt zum ausgesandten Laserstrahl 30 reflektiert wird. In dem dargestellten Spezialfall trifft er dann mit einem Wert Null des Versatzes 71 zum Detektorzentrum 15 dem PSD 10 auf.

Der Versatz 71 *("PSDOffset")* und der Strahlversatz 61 *("ZAAbst")* können durch einen beide Einzelparameter enthaltenden Gesamtversatz *("Offset'")* auf dem PSD 10 bestimmt und dann durch ein einfaches Gleichungssystem voneinander separiert werden:

$$Richtung_{korrigiert} = \arctan\left(\frac{PSDOffset - ZAAbst}{2 \times Dist}\right) - Richtungsfehler \qquad (1)$$

$$PSDOffset - ZAAbst = Offset' \qquad (2)$$

Solange PSD-Offset (Versatz 71) und Zielachsenabstand (Strahlversatz 61) klein genug sind, bleibt dabei die Strahlüberdeckung zwischen ausgehenden und zurückkommenden Strahl bei einem Einsatz von Laserinterferometern (IFM) und absoluten Distanzmessern (ADM) für zuverlässige Messungen ausreichend gut. Für eine genaue Kalibrierung wird aber ein solcher Fall bevorzugt, bei dem kein Versatz auftritt.

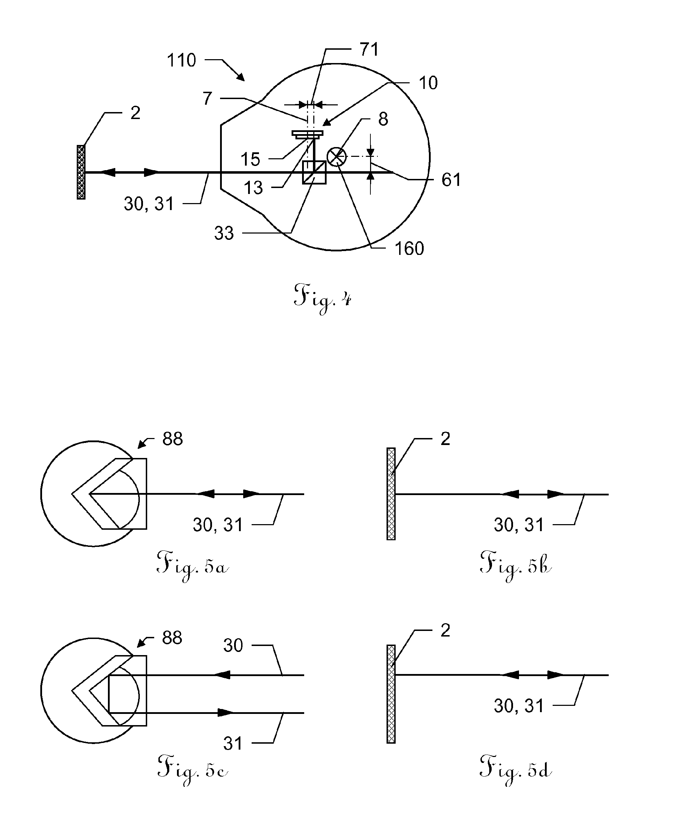

In Figur 4 ist der in den Figuren 3a-b gezeigte grosse Einzel-Retroreflektor 88 durch einen erfindungsgemässen Retroreflektor 2 ersetzt. Dieser besteht aus einer Vielzahl von Einzelreflektoren und ist damit im Gegensatz zum Einzel-Retroreflektor 88 in einem zweidimensionalen Bereich zur Erzeugung einer im Wesentlichen versatzfreien, koaxialen Retroreflexion einer auf ihm auftreffenden Messstrahlung 30 ausgebildet, ohne dabei einen wesentlichen Versatz der reflektierten Messstrahlung 31 zur Richtung der auftreffenden Messstrahlung 30 zu erzeugen.

Aus einer Vielzahl von Einzelreflektoren bestehende Retroreflektoren sind in verschiedenen Formen und aus verschiedenen Materialien hergestellt erhältlich, beispielsweise als Rückstrahler aus hartem Kunststoff, wie sie beispielsweise für im Strassenverkehr verwendet werden, oder als geprägte Kunststofffolien. Häufig weisen derartige, typischerweise in Massenfabrikation hergestellte und aus einer Vielzahl von Einzelreflektoren bestehende Retroreflektoren Fehler oder Unperfektheiten an ihren reflektierenden Oberflächen.

Die Figuren 5a-d illustrieren den grundsätzlichen Vorteil eines in einem zweidimensionalen Bereich zur Erzeugung einer im Wesentlichen versatzfreien, koaxialen Retroreflexion einer auf ihm auftreffenden Messstrahlung 30 ausgebildeten Retroreflektors 2 gegenüber einem herkömmlichen, als "Corner Cube" ausgebildeten Einzel-Retroreflektor 88.

In Figur 5a trifft Messstrahlung 30 mittig auf den Einzel-Retroreflektor 88 und wird von diesem im Wesentlichen versatzfrei als reflektierte Messstrahlung 31 reflektiert.

In Figur 5b trifft Messstrahlung 30 mittig auf einen aus einer Vielzahl von Einzelreflektoren bestehenden Reflektor 2 und wird von diesem im Wesentlichen versatzfrei als reflektierte Messstrahlung 31 reflektiert.

In Figur 5c trifft Messstrahlung 30 nicht mittig auf den Einzel-Retroreflektor 88 und wird von diesem als reflektierte Messstrahlung 31 mit einem Versatz zur eintreffenden Messstrahlung 30 reflektiert.

In Figur 5d trifft Messstrahlung 30 nicht mittig auf einen aus einer Vielzahl von Einzelreflektoren bestehenden Reflektor 2 - wie in Figur 5c für den Einzel-Retroreflektor 88 dargestellt. Dabei wird die Messstrahlung 30 im Gegensatz zu Figur 5c im Wesentlichen versatzfrei als reflektierte Messstrahlung 31 reflektiert.

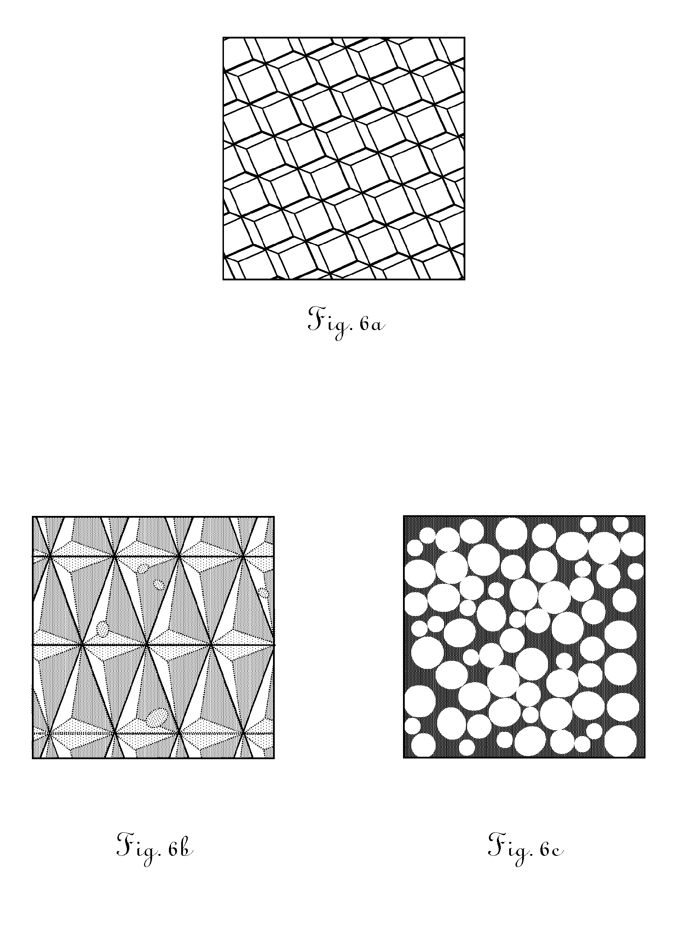

Figur 6a zeigt eine mikroskopische Aufnahme eines Rückstrahlers, wie er beispielsweise für ein Fahrrad Verwendung findet. Er besteht aus vielen kleinen Prismen in guter Qualität, die aber relativ gross sind. Hier nicht dargestellt, aber in bekannten Rückstrahlern dieses Typs häufig vorkommend, sind ausserdem Stossstellen von zueinander verkippten Zonen. Die verkippten Zonen sind dafür vorgesehen, einen grösseren erfassbaren Einfallswinkel für die Reflexion zu bewirken. Figur 6b zeigt eine Mikroskopaufnahme einer Folie mit geprägten Prismen. Im Vergleich zu den Prismen gemäss Figur 6a sind die einzelnen Prismen sehr viel kleiner. In ihrer Form sind sie aber selten perfekt, sondern weisen deutlich erkennbare Defekte auf. Figur 6c zeigt eine Mikroskopaufnahme einer Folie mit Glaskugeln. Die einzelnen Glaskugeln sind in ihrer Grösse sehr unterschiedlich und weisen zwischen einander teilweise relativ grosse Abstände auf. Als Folge sind Reflexionen von einer solchen Folie in der Regel relativ intensitätsschwach.

Minderungen der Reflexionseigenschaften derartiger aus einer Vielzahl von Einzelreflektoren bestehender und typischerweise in Massenfabrikation hergestellter Retroreflektoren gegenüber den Reflexionseigenschaften wesentlich aufwendig herstellbarer Einzel-Rückreflektoren wie Einzelprismen oder "Corner Cubes" lassen sich wie folgt zusammenfassen:

Aufgrund der vorgenannten Unperfektionen der aus vielen Einzelreflektoren bestehenden Retroreflektoren, insbesondere auch Abweichungen der Ausgestaltung der Einzelreflektoren von einer vorgesehenen idealen Form, wird im Vergleich zu grossflächigen Einzel-Rückreflektoren mit nahezu perfekten optischen Oberflächen relativ wenig des einfallenden Lichts reflektiert oder das einfallende Licht divergierend reflektiert. Ein solcher Effekt kann für typische Massenanwendungen, beispielsweise an Warnwesten oder Strassenbefestigungspfosten, durchaus erwünscht sein,

ist aber für eine Verwendung mit einem Lasertracker typischerweise eher nachteilig. Ausserdem können die Intensitäten der reflektierten Teilstrahlen stark unterschiedlich sein. In Extremfällen wird von einigen Einzelreflektoren sogar kein Licht mehr zurückgeworfen. Auch Kratzer oder Verschmutzungen auf den Einzelreflektoren können ähnliche nachteilige Effekte haben.

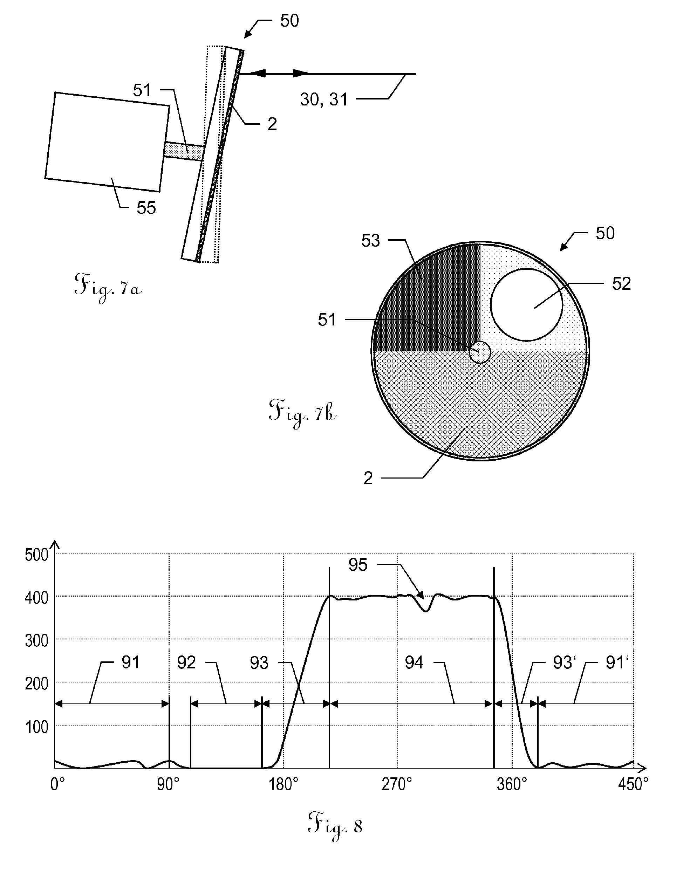

Anhand von Figur 7a ist eine erste Weiterentwicklung der vorliegenden Erfindung illustriert. Ein aus vielen Einzelreflektoren bestehender Retroreflektor 2, insbesondere eine kreisförmig ausgebildete retroreflektierende Folie, ist auf einer Scheibe 50 und damit zusammen auf einer von einem Motor 55 rotierbar antreibbaren Drehachse 51 montiert. Durch sequentielle Messung und Mittelung der Daten aus den sequentiellen Messungen kann ein Effekt eines Granulation- bzw. Interferenzmusters des auf den PSD zurückgeworfenen Lichts 31 auf die Bestimmung des Intensitätsschwerpunkts des zurückgeworfenen Lichts 31 schon nach wenigen Messungen eliminiert werden. Auch nachteilige Effekte schwach oder gar nicht reflektierender Einzelreflektoren können dadurch beseitigt werden.

Gemäss der Darstellung in Figur 7a ist der Retroreflektor 2 erfindungsgemäss ausserdem nicht senkrecht, sondern unter einem von 90° abweichenden Winkel seiner reflektierenden Fläche zur Achse 51 angeordnet. Durch eine bei Rotation der Achse 51 mit Retroreflektor 2 und Scheibe 50 daraus folgende Taumelbewegung des Retroreflektors 2 ändern sich dann sequentiell die Anzielwinkel und damit die Abstände zum Retroreflektor 2 bzw. Weglängen auf den Rückreflektor 2 eingestrahlten Lichts 30 permanent. Dabei betragen die Abstandsänderungen idealerweise mehrere Wellenlängen des eingestrahlten Lichts 30. Dadurch werden bei sequentiellen Messungen entsprechende sequentielle Verschiebungen eines Interferenzmusters des auf den PSD 10 gelenkten zurückkommenden Lichts 31 erzeugt, so dass sich durch Mittelung der Messergebnisse Effekte der Interferenzen eliminiert werden können. Die Taumelbewegung ist in Figur 7a durch Überlagerung von mit durchgezogenen sowie mit durchbrochenen Linien angedeuteten unterschiedlichen Positionen von Retroreflektor 2 und Scheibe 50 illustriert.

Ausserdem können, wie in Figur 7a ebenfalls dargestellt, durch Erzeugung einer schrägen, d. h. von 90° verschiedenen, Richtung des auf den Retroreflektor 2 eingestrahlten Lichts 30 nachteilige Effekte durch an dessen Frontfläche und nicht an den zur Reflexion vorgesehenen optischen Flächen ebenfalls beseitigt werden.

Figur 7b illustriert eine zusätzliche Weiterentwicklung zu der Ausführungsform der Erfindung gemäss Figur 7a. Diese Weiterentwicklung ist insbesondere auch geeignet für eine Anordnung der Scheibe 50 mit darauf befindlichem, geometrisch geeignet ausgebildetem Rückstrahler bzw. retroreflektierender Folie in einer Strahllenkeinheit.

Dargestellt in Figur 7b ist eine Scheibe 50 mit einer für unterschiedlichen Lichtdurchlass segmentierten Ausgestaltung bzw. Oberfläche. Die Scheibe 50 ist um eine Achse 51 schwenk und/oder rotierbar angeordnet. Ein, in diesem Fall, halbkreisartiger Bereich der Scheibe ist mit einem Retroreflektor 2, insbesondere einer retroreflektierenden Folie, ausgestattet. Ein weiterer Bereich 53 ist für einen Dunkelabgleich, d. h. für Messungen zu einer Bestimmung einer Basislinie von Detektorsignalen, ohne auf den PSD zurückreflektiertes Licht 31, bereitgestellt. Dabei kann dieser Bereich beispielsweise eine Licht absorbierende und insbesondere auch in Reflexion diffus streuende dunkle Oberfläche, insbesondere aus Filz oder Samt, aufweisen. Ein weiterer Bereich 42 ist zu einer Transparenz für Licht, d. h. reguläre Messungen mit dem Lasertracker, ausgebildet, beispielsweise als einfache Öffnung.

Diese Weiterentwicklung der Erfindung ist mit verschiedenen Vorteilen verbunden. Insbesondere muss der ausgesandte Laserstrahl 30 zwecks Messungen zur Bestimmung des Servo-Kontrollpunkts und dessen Abstands zum Zentrum des PSD für die Selbstkalibrierung der Justierung und der Anzielung eines, insbesondere zu verfolgenden, ausserhalb des Lasertrackers angeordneten Objekts nicht unterschiedlich ausgerichtet werden.

Für die Bestimmung des Servokontrollpunktes gibt es dabei verschiedene Ausführungsmöglichkeiten: Gemäss einer ersten Ausführungsmöglichkeit pendelt die Scheibe 50 im Bereich des Retroreflektors 2 in Aussendungsrichtung des Laserstrahls 30 zwischen zwei Positionen hin und her, wobei fortlaufend sequentielle Messungen durchgeführt werden, sodass nachteilige Effekte von Unperfektionen des Retroreflektors 2 durch Mittelung der sequentiellen Messergebnisse eliminierbar sind. Gemäss einer anderen Ausführungsmöglichkeit rotiert die Scheibe 50 mit ihren ausgebildeten Bereichen 2, 53 und 52 kontinuierlich in einer Richtung, wobei fortlaufend die Intensität auf den PSD zurückgeworfenen Lichts gemessen und als Funktion der rotatorischen Stellung der Scheibe 50 gemessen, als ein Messprotokoll aufgezeichnet und ausgewertet werden.

Ein beispielhafter Verlauf mit der Ausführungsform der Erfindung gemäss Figur 7b durchgeführter und mit dem PSD bestimmter Intensitäten auf diesen Detektor auftreffenden Lichts, als Funktion der rotatorischen Position der Scheibe 50, bei einer Rotation der Scheibe 50 gegenüber dem Uhrzeigersinn, ist in Figur 8 dargestellt, die in Verbindung mit der Ausbildung der Scheibe 50 gemäss Figur 7b zu verstehen ist.

Die beispielhaften Messwerte des PSD zeigen für eine Scheibenposition zwischen 0° und 90°, d. h. einem Darstellungsbereich 91, einen Lichtintensitätswert, in willkürlichen Einheiten, von nahe oder knapp über Null. Werte knapp über Null werden durch Restreflexionen von dem im Wesentlichen, aber in der Praxis nicht vollständig absorbierenden Bereich 53 der Scheibe 50 erzeugt. Der dargestellte Winkelbereich 92 zwischen knapp über 90° und nahe 180° entspricht der Position der Scheibe 50, in der sie in ihrem in Figur 7b dargestellten Bereich 52 für sogenannte reguläre Messungen des Lasertrackers, mit Anzielung eines, gegebenenfalls zu verfolgenden Objekts, für ausgesandtes Licht transparent ist. Folglich tritt kein reflektiertes Licht auf den PSD, und sein Intensitätssignal hat den Wert Null.

Die beispielhaften Messwerte des PSD sind für Zwecke der Selbstkalibrierung für die Winkelbereiche 93, 94 und 93' von besonderer Relevanz. Für die Winkelbereiche 93 zwischen knapp unter 180° und knapp über 180° sowie 93' zwischen knapp unter und knapp über 360° liegt jeweils eine Situation vor, bei welcher der eingestrahlte Laserstrahl 30 nur teilweise auf den Bereich des Retroreflektors 2 auftrifft und von dort reflektiert wird. Bevorzugt wird mittels einer geeigneten Analyse-Software oder eines geeigneten Analyse-Algorithmus für die, in dieser Darstellung an einen, im Wesentlichen um 360° zentrierten, Zwischenbereich 94 angrenzende Bereiche 93, 93' ein Schwellenwert eines ermittelten unteren Intensitätswertes für eine Bestimmung eines Mittelwerts der für eine Bestimmung der für den Bereich 94 ermittelten Intensitätswerte zur Bestimmung des Intensitätsschwerpunkts von aus dem Bereich 2 von Intensitäten von Lichtstrahlen, die vom Retroreflektor 2 zurückgeworfen werden, festgelegt.

Ein solcher Schwellenwert kann vorteilhaft auch dazu verwendet werden, Werte von Messungen an fehlerhaften oder verschmutzten Stellen eines Retroreflektors herauszufiltern. Grundsätzlich ist die Verwendung eines solchen Schwellenwerts zur Eliminierung von Werten derartiger Fehlmessungen auch für die vorangehend beschriebene Methode einer pendelnden Scheibe einsetzbar. Beispielhaft ist in Figur 8 im Bereich 94 ein vergleichsweise niedriger Intensitätsmesswert 95 angegeben, der auf eine derartige Fehlstelle auf dem Retroreflektor zurückzuführen ist.

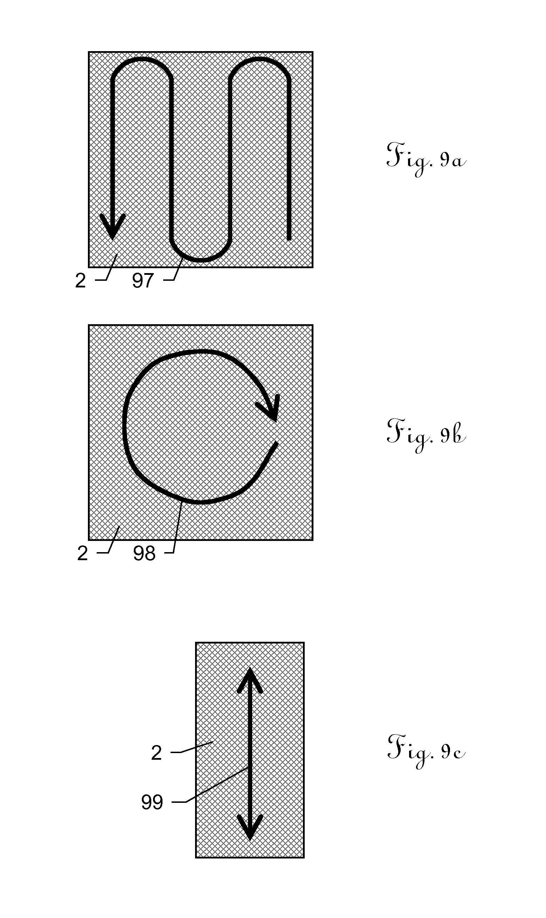

Als ein Äquivalent für sequentielle Messungen auf verschiedenen Punkten einer mit einem Retroreflektor pendelnden oder drehenden Scheibe zwecks Mittelung sequentiell bestimmter Messwerte und/oder Eliminierung der Werte auf Fehlstellen des Retroreflektors durchgeführter Messungen mittels eines Schwellenwerts, insbesondere für Konfigurationen, bei denen der Retroreflektor ausserhalb der Strahllenkeinheit angeordnet ist, wird, gemäss einer weiteren vorteilhaften Ausführungsform die Strahllenkeinheit, insbesondere motorangetrieben, um die Kipp- und/oder Drehachse bewegt, um mit dem ausgesandten Laserstrahl 30 auf dem Retroreflektor eine Bahn vorgegebener Geometrie abzufahren. Die Figuren 9a und 9b illustrieren beispielhaft für eine Konfiguration, bei welcher der aus vielen Einzelreflektoren bestehende Retroreflektor am stationären Teil angeordnet ist, zweidimensionale Bahnen in Form einer mäanderförmigen Bahn 97 und einer Kreisbahn 98. Figur 9c illustriert beispielhaft für eine Konfiguration, bei welcher der aus vielen Einzelreflektoren bestehende Retroreflektor am rotierbaren Teil angeordnet ist, eine eindimensionale Bahn, die vorteilhaft mehrfach abgefahren wird, in Form eines geraden Streifens 99.

Es versteht sich, dass diese dargestellten Figuren nur mögliche Ausführungsbeispiele schematisch darstellen.

Die verschiedenen Ansätze können ebenso miteinander sowie mit Verfahren und Geräten des Standes der Technik kombiniert werden.

**Patentansprüche**

1. Lasertracker (1) zur Positionsbestimmung eines Ziels (80) sowie insbesondere zur fortlaufenden Verfolgung des Ziels (80), aufweisend

   ● eine Strahlquelle zur Erzeugung von Messstrahlung (30),
   ● eine eine Stehachse (9) definierende Basis (140),
   ● eine Stütze (120), die eine im Wesentlichen orthogonal zur Stehachse (9) stehende Kippachse (8) definiert, wobei die Stütze (120) relativ zur Basis (140) um die Stehachse (9) motorisiert schwenkbar ist und ein Horizontalschwenkwinkel durch eine Ausrichtung der Stütze (120) relativ zur Basis (140) definiert wird,
   ● eine um die Kippachse (8) relativ zur Stütze (120) motorisiert schwenkbare Strahllenkeinheit (110), wobei ein Vertikalschwenkwinkel durch eine Ausrichtung der Strahllenkeinheit (110) relativ zur Stütze (120) definiert wird, zur Emission und Ausrichtung der Messstrahlung (30) und zum Empfang von zumindest einem Teil der am Ziel (80) reflektierten Messstrahlung (31),
   ● Winkelmessfunktionalität zur Bestimmung des Horizontalschwenkwinkels und des Vertikalschwenkwinkels,
   ● Entfernungsmessfunktionalität und
   ● einen positionssensitiven Flächendetektor (10) zur Bestimmung eines Auftreffpunkts (13) der reflektierten Messstrahlung (31) auf dem Flächendetektor (10) und zur Erzeugung eines Ausgangssignals zur Steuerung einer Zielverfolgungsfunktionalität,
   wobei der Lasertracker (1) zur Bestimmung von Kalibrierungsparametern bezüglich einer Position und/oder Richtung der Messstrahlung (30) ausserdem eine retroreflektierende Kalibrierungsvorrichtung aufweist zur Verwendung mit einer Selbstkalibrierungsfunktionalität, im Rahmen derer ein Auftreffpunkt (13) der von der Kalibrierungsvorrichtung reflektierten Messstrahlung (31) auf dem positionssensitiven Flächendetektor (10) bestimmbar ist,
   **dadurch gekennzeichnet, dass**
   die Kalibrierungsvorrichtung einen Retroreflektor (2) aufweist, der in einem zweidimensionalen Bereich, unabhängig vom Auftreffpunkt der Messstrahlung (30) innerhalb des zweidimensionalen Bereiches, zur Erzeugung einer versatzfreien, koaxialen Retroreflexion einer auf ihm auftreffenden Messstrahlung (30) ausgebildet ist.

2. Lasertracker (1) nach Anspruch 1,
   **dadurch gekennzeichnet, dass**
   die bestimmbaren Kalibrierungsparameter einen Servokontrollpunkt umfassen.

3. Lasertracker (1) nach Anspruch 1 oder Anspruch 2,
   **dadurch gekennzeichnet, dass**

   ● im Rahmen der Selbstkalibrierungsfunktionalität mit der Messstrahlung (30) ein Pfad auf dem Retroreflektor (2) abfahrbar ist, sodass jeweils an einer Vielzahl von unterschiedlichen Punkten des zweidimensionalen Bereiches reflektierte Messstrahlung (31) erzeugbar ist, und
   ● der Lasertracker (1) dazu ausgestaltet ist, im Rahmen der Selbstkalibrierungsfunktionalität für eine Vielzahl von Messdaten, die durch die an der Vielzahl von unterschiedlichen Punkten reflektierte Messstrahlung (31) erzeugt wurden, einen Mittelwert zu ermitteln.

4. Lasertracker (1) nach einem der Ansprüche 1 bis 3,
   **dadurch gekennzeichnet, dass**
   der Retroreflektor (2) eine Vielzahl von Einzelreflektoren aufweist, insbesondere wobei

   ● der Retroreflektor (2) als eine retroreflektierende Folie oder ein starres Mikroprismen-Array, insbesondere aus Kunststoff oder Glas, ausgebildet ist, und/oder
   ● die Einzelreflektoren reflektierende Kugeln oder Prismen umfassen.

5. Lasertracker (1) nach einem der Ansprüche 1 bis 4, **dadurch gekennzeichnet, dass**

   ● der Retroreflektor (2) an der Basis (140) oder an der Stütze (120) angeordnet ist, insbesondere in die Basis (140) oder in die Stütze (120) integriert oder mit der Basis (140) oder der Stütze (120) fest verbunden, und
● die Strahllenkeinheit (110) dazu ausgestaltet ist, mit der Messstrahlung (30) einen, insbesondere kreisförmigen, mäanderförmigen oder linienförmigen, Pfad (97, 98, 99) auf dem Retroreflektor (2) abzufahren.

6. Lasertracker (1) nach einem der Ansprüche 1 bis 5,
**dadurch gekennzeichnet, dass**
der Retroreflektor (2) in der Strahllenkeinheit (110) oder zwischen der Strahlquelle und der Strahllenkeinheit (110) angeordnet ist, insbesondere

● in einen Strahlgang der Messstrahlung (30) hineinbewegbar, und/oder
● kombiniert mit einer Vorrichtung zur Lichtabschattung in einem Strahlengang zu dem positionssensitiven Flächendetektor (10).

7. Lasertracker (1) nach einem der Ansprüche 1 bis 6,
**dadurch gekennzeichnet, dass**
der Retroreflektor (2)
● in einer nicht orthogonal zur Richtung der Messstrahlung (30) liegenden Ebene angeordnet ist, oder
● im Rahmen der Selbstkalibrierungsfunktionalität in eine nicht orthogonal zur Richtung der Messstrahlung (30) liegende Ebene bewegbar ist.

8. Lasertracker (1) nach einem der Ansprüche 1 bis 7,
**dadurch gekennzeichnet, dass**
der Retroreflektor (2) als ein Bestandteil einer um eine Rotationsachse (51) schwenkbaren oder rotierbaren Scheibe (50) ausgebildet ist, sodass jeweils an einer Vielzahl von Einzelreflektoren des Retroreflektors (2) reflektierte Messstrahlung (31) erzeugbar ist, insbesondere wobei die Scheibe (50) zwischen zwei vorgegebenen Rotationswinkeln drehbar oder in mindestens einer Rotationsrichtung kontinuierlich rotierbar angeordnet ist.

9. Lasertracker (1) nach Anspruch 8,
**dadurch gekennzeichnet, dass**
die Scheibe (50) ausgestaltet ist mit

● einem ersten Oberflächenanteil, der von dem Retroreflektor (2) gebildet ist,
● einem zweiten Oberflächenanteil (53), der für die Messstrahlung (30) im Wesentlichen undurchlässig ist und insbesondere eine Licht absorbierende und/oder in Reflexion diffus streuende dunkle Oberfläche aufweist, und
● einem dritten Oberflächenanteil (52), der für die Messstrahlung (30) im Wesentlichen durchlässig ist.

10. Lasertracker (1) nach Anspruch 8 oder Anspruch 9,
**dadurch gekennzeichnet, dass**
der Retroreflektor (2) nicht senkrecht zur Rotationsachse (51) angeordnet ist, so dass bei einer Rotation des Retroreflektors (2) um die Rotationsachse (51) eine Taumelbewegung des Retroreflektors (2) bewirkbar ist.

11. Lasertracker (1) nach einem der vorhergehenden Ansprüche,
**gekennzeichnet durch**

● eine erste Kamera (112) zur Erfassung der räumlichen Ausrichtung des Ziels (80), und
● eine zweite Kamera (114) zur Groblokalisierung des Ziels (80),

und/oder **dadurch**, dass

● die Messstrahlung (30) ein Laserstrahl ist, und
● der Lasertracker (1) einen Absolutdistanzmesser und/oder ein Interferometer aufweist.

12. Selbstkalibrierungsverfahren für einen Lasertracker (1), insbesondere nach einem der Ansprüche 1 bis 11, mit einem

● Aussenden von Messstrahlung (30) auf eine Kalibrierungsvorrichtung,
● Erzeugen einer Retroreflexion einer auf die Kalibrierungsvorrichtung auftreffenden Messstrahlung (30) als einer reflektierten Messstrahlung (31),
● Bestimmen eines Auftreffpunktes (13) der von der Kalibrierungsvorrichtung reflektierten Messstrahlung (31) auf einem positionssensitiven Flächendetektor (10) und

● Bestimmen von Kalibrierungsparametern bezüglich einer Position und/oder Richtung der Messstrahlung (30),

**dadurch gekennzeichnet, dass**

die Kalibrierungsvorrichtung einen in den Lasertracker (1) integrierten oder am Lasertracker (1) befestigten Retroreflektor (2) aufweist, wobei

● die Messstrahlung (30) auf einen zweidimensionalen Bereich des Retroreflektors ausgesendet wird, und
● unabhängig vom Auftreffpunkt der Messstrahlung (30) innerhalb des zweidimensionalen Bereiches eine versatzfreie, koaxiale Retroreflexion der Messstrahlung (30) als reflektierter Messstrahlung (31) erzeugt wird.

13. Selbstkalibrierungsverfahren nach Anspruch 12,
**gekennzeichnet durch**

● ein Erzeugen reflektierter Messstrahlung (31) an einer Vielzahl von unterschiedlichen Punkten des zweidimensionalen Bereiches, und
● ein Ermitteln eines Mittelwertes für eine Vielzahl von Messdaten, die **durch** die an der Vielzahl von unterschiedlichen Punkten reflektierte Messstrahlung (31) erzeugt wurde.

14. Selbstkalibrierungsverfahren nach Anspruch 13,
**gekennzeichnet durch**
ein Abfahren eines, insbesondere kreisförmigen, mäanderförmigen oder linienförmigen, Pfades (97, 98, 99) auf dem Retroreflektor (2) mit der Messstrahlung (30), insbesondere **durch** ein Bewegen des Retroreflektors (2) und eines die Messstrahlung (30) emittierenden oder weiterleitenden Teiles des Lasertrackers (1) relativ zueinander.

15. Selbstkalibrierungsverfahren nach einem der Ansprüche 12 bis 14,
**gekennzeichnet durch**
ein Schwenken oder Rotieren des Retroreflektors (2) in einen Strahlgang der Messstrahlung (30) hinein, insbesondere wobei der Retroreflektor (2) nicht senkrecht zu einer Schwenk- oder Rotationsachse (51) angeordnet ist, sodass das Schwenken oder Rotieren eine Taumelbewegung des Retroreflektors (2) bewirkt.

*Fig. 1*

Fig. 2

*Fig. 3a*

Stand der Technik

*Fig. 3b*

Stand der Technik

Fig. 4

Fig. 5a

Fig. 5b

Fig. 5c

Fig. 5d

Fig. 6a

Fig. 6b

Fig. 6c

Fig. 7a

Fig. 7b

Fig. 8

Fig. 9a

2    97

Fig. 9b

2    98

Fig. 9c

2

99

Europäisches
Patentamt

European
Patent Office

Office européen
des brevets

# EUROPÄISCHER RECHERCHENBERICHT

**Nummer der Anmeldung**

EP 12 19 8763

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2009/109426 A1 (CRAMER PETER G [US] ET AL) 30. April 2009 (2009-04-30) * das ganze Dokument * ----- | 1-15 | INV. G01S17/66 G01S17/06 G01S7/497 |
| X,D | EP 1 420 264 A1 (LEICA GEOSYSTEMS AG [CH]) 19. Mai 2004 (2004-05-19) * das ganze Dokument * ----- | 1-15 | |
| A | EP 1 770 360 A1 (LEICA GEOSYSTEMS AG [CH]) 4. April 2007 (2007-04-04) * das ganze Dokument * ----- | 1-15 | |

**RECHERCHIERTE SACHGEBIETE (IPC)**

G01S
G01C

Der vorliegende Recherchenbericht wurde für alle Patentansprüche erstellt

| Recherchenort | Abschlußdatum der Recherche | Prüfer |
|---|---|---|
| München | 24. April 2013 | Beer, Mark |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
.....................................................................................
& : Mitglied der gleichen Patentfamilie, übereinstimmendes
     Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**
EP 12 19 8763

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-04-2013

| Im Recherchenbericht angeführtes Patentdokument | Datum der Veröffentlichung | Mitglied(er) der Patentfamilie | Datum der Veröffentlichung |
|---|---|---|---|
| US 2009109426 A1 | 30-04-2009 | KEINE | |
| EP 1420264 A1 | 19-05-2004 | AT 494561 T | 15-01-2011 |
| | | EP 1420264 A1 | 19-05-2004 |
| | | JP 4553573 B2 | 29-09-2010 |
| | | JP 2004170412 A | 17-06-2004 |
| | | US 2004136012 A1 | 15-07-2004 |
| EP 1770360 A1 | 04-04-2007 | AT 416361 T | 15-12-2008 |
| | | AU 2006296828 A1 | 05-04-2007 |
| | | CA 2623979 A1 | 05-04-2007 |
| | | CN 101278171 A | 01-10-2008 |
| | | EP 1770360 A1 | 04-04-2007 |
| | | EP 1929242 A1 | 11-06-2008 |
| | | JP 2009510413 A | 12-03-2009 |
| | | US 2008252958 A1 | 16-10-2008 |
| | | WO 2007036309 A1 | 05-04-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4790651 A
- US 4714339 A
- EP 1420264 A
- US 20090109426 A
- WO 2005026772 A
- WO 2007079600 A1